# EUROPÄISCHE PATENTANMELDUNG

(11) **EP 1 275 829 A1**
(43) Veröffentlichungstag der Anmeldung: **15.01.2003**
(21) Anmeldenummer: 02011697.6
(22) Anmeldetag: 04.06.2002
(51) Int. Cl.: F01N 7/08, F01N 7/14, F01N 3/20, F01N 3/05

(54) **Einrichtung zum Einstellen der Temperatur von Abgasen**

(30) Priorität: 10.07.2001 DE 10133422
(71) Anmelder: Bayerische Motoren Werke Aktiengesellschaft, 80809 München (DE)
(72) Erfinder: Berger, Michael, 81549 München (DE); Jelinek, Hans, 85302 Gerolsbach (DE)

(57) **Zusammenfassung**

Die Temperatur von in einem Abgasrohr (2) strömenden Abgasen wird geregelt, indem ein zwischen dem Abgasrohr (2) und einer dieses umgebenden Außenschale (3) befindlicher Luftspalt (4) zur Isolation abschließbar und Kühlung passiv und/oder aktiv belüftbar ist.

## Beschreibung

Die Erfindung betrifft eine Einrichtung zum Einstellen der Temperatur von in einem mit einer Außenschale versehenen Rohr geführten Abgasen, wobei zwischen Rohr und Außenschale ein Luftspalt gebildet wird.

Um die Schadstoffemission von Kraftfahrzeugen zu verringern, ist eine Abgasnachbehandlung mittels Katalysatoren notwendig; insbesondere zur Stickoxidreduktion kommen dabei sogenannte Denoxkatalysatoren zur Anwendung. Für den Ablauf der Reaktionen im Katalysator ist es einerseits vorteilhaft, wenn die Abgastemperatur beim Eintritt in den Katalysator in etwa im Bereich zwischen 250°C und 550°C, insbesondere zwischen 280°C und 500°C liegt, andererseits hat sich als Schwierigkeit herausgestellt, dass die thermische Beständigkeit üblicher Denoxkatalysatoren gering ist, weshalb die Abgastemperatur derzeit 750° bis 800° Celsius nicht übersteigen darf.

Es besteht also einerseits die Notwendigkeit, beispielsweise während der Kaltstartphase oder im Schwachlastbetrieb, den Katalysator schnell aufzuheizen bzw. nicht zu stark abkühlen zu lassen, andererseits ist im Volllastbereich eine Kühlung der Abgase vor Eintritt in den Katalysator notwendig.

Verschiedene Vorrichtungen und Verfahren zur Einstellung der Temperatur eines Katalysators sind im Stand der Technik bekannt geworden. So offenbart beispielsweise die DE 43 10 926 A1 eine Vorrichtung und ein Verfahren zur Schadstoffminderung im Abgas, wobei eine Erhöhung der Katalysatortemperatur durch Zuleitung von heißen Abgasen, eine Absenkung der Katalysatortemperatur durch einen mit Kühlrippen versehenen Luft-/Luftwärmetauscher erreicht wird. Die genannte Veröffentlichung steht beispielhaft für eine Vielzahl oft sehr komplizierter und aufwendiger Vorrichtungen und Verfahren zur Regelung der Abgastemperatur.

Aufgabe der Erfindung ist es, eine Einrichtung zum Einstellen der Temperatur von Abgasen zu schaffen, die mit einfachen Mitteln eine Einstellung der Abgastemperatur gestattet und somit kostengünstig herzustellen und zu montieren ist sowie einen fehler- und wartungsfreien Betrieb ermöglicht.

Die erfindungsgemäße Lösung der Aufgabe erfolgt mit den Merkmalen des Anspruches 1, wobei die zugrundeliegende Idee die Nutzung eines zwischen einem abgasführenden Innenrohr und einer Außenschale gebildeten Luftspaltes zur Isolierung einerseits und zur Wärmezu- oder -abfuhr andererseits beinhaltet.

Vorteilhafte Ausgestaltungen der erfindungsgemäßen Einrichtung sind in den Unteransprüchen beschrieben.

Der zwischen Innen- und Außenschale gebildete Luftspalt bildet ein abgeschlossenes Volumen, welches über einen Lufteintrittskanal befüllbar ist. Zweckmäßigerweise weist der Luftspalt weiterhin einen Luftaustrittsbereich auf, wobei Lufteintritt- und/ oder Luftaustritt abschließbar sind. Eine Belüftung des Volumens kann passiv beispielsweise durch Öffnen von Regelklappen oder aktiv mittels eines Lüfters erfolgen.

Nachfolgend wird ein bevorzugtes Ausführungsbeispiel der Erfindung unter Bezugnahme auf die Figur näher erläutert. Dabei zeigt schematisch und beispielhaft:

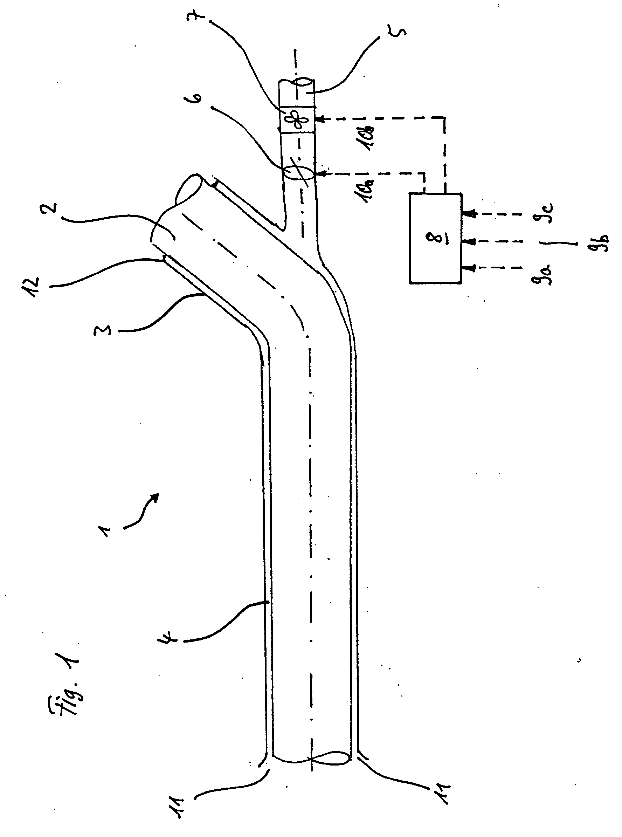

- Figur 1: ein Doppelrohr zur Abgastemperierung.

In Figur 1 ist ein Doppelrohr 1 zur Abgastemperierung dargestellt. Das abgasführende Innenrohr 2 ist von einer Außenschale 3 umgeben, wodurch der Luftspalt 4 gebildet wird. Das Außenrohr 3 ist an einem Endbereich 12 dicht mit dem Innenrohr verbunden, wobei die Verbindung zweckmäßigerweise verschieblich und/oder elastisch ausgestaltet ist, um temperaturbedingte Differenzen in der Ausdehnung auszugleichen. Der Luftspalt 4 ist an einem Ende mit einem Lufteintrittsstutzen 5 versehen, an einem anderen Ende weist er Luftaustritte 11 auf. Sowohl der Lufteintritt als auch der Luftaustritt erfolgt beispielsweise über ein angeflanschtes Zuführungs- bzw. Austrittsrohr, jedoch ist es auch sehr zweckmäßig, wenn zum Luftein- bzw. austritt mehrere über den Umfang verteilte Einlass- bzw. Auslassöffnungen vorgesehen sind. Die Ein- bzw. Austrittsöffnungen sind vorteilhaft rund ausgebildet, jedoch kann es auch zweckmäßig sein diese schlitzförmig auszubilden. Angestrebt wird eine Ausgestaltung, bei welcher beim Durchströmen des Luftspaltes 4 vom Lufteintritt 5 zum Luftaustritt 11 hin ein bestmöglicher Wärmeübergang vom Innenrohr 2 zum durchströmenden Medium hin erfolgen kann.

Das im Luftspalt 4 gebildete Luftvolumen ist abschließbar; hierzu ist der Lufteintritt 5 und gegebenenfalls auch der Luftaustritt 11, beispielsweise wie in der Figur dargestellt, mittels einer Drosselklappe 6 im Lufteintrittsrohr, welche um eine Achse verschwenkbar ist, abschließbar. In einem anderen Ausführungsbeispiel kommt zweckmäßigerweise eine Schwenkklappe, ein Flachschieber oder ein Drehschieber zur Anwendung.

Zur Abgasnachbehandlung eingesetzte Denoxkatalysatoren werden zur Stickoxidreduktion insbesondere bei direkt einspritzenden mager betriebenen Ottomotoren sowie Dieselmotoren eingesetzt. Verwendete Denoxkatalysatoren verfügen über einen Absorber-Katalysator, der in der Lage ist, bei überstöchiometrischem Motorbetrieb NOₓ zwischenzuspeichern und dieses in kürzeren unterstöchiometrischen Betriebsphasen wieder umzusetzen. Insbesondere finden als Speichermaterial Alkali- und Erdalkalimetalle wie Barium Verwendung. Vorraussetzung für die Funktionsfähigkeit ist jedoch ein Betrieb in vorgegebenen Temperaturbereichen. Im Ausführungsbeispiel soll die Abgastemperatur beim Eintritt in den Denoxkatalysator im Bereich zwischen 250°C und 550°C, insbesondere zwischen 280°C und 500°C, liegen. Um diese Abgastemperatur, beispielsweise während einer Kaltstartphase, schnell zu erreichen, bzw. im Schwachlastbetrieb nicht zu unterschreiten, werden Lufteinlass 5 und gegebenenfalls der Luftauslass 11 verschlossen, so dass das Volumen im Luftspalt 4 abgeschlossen ist. Die zwischen Innenrohr 2 und Außenschale 3 liegende Luftschicht wirkt als Isolator, so dass wenig Abgaswärme auf dem Weg zum Katalysator verloren geht.

Der temperaturmäßige Betriebsbereich des Denoxkatalysators ist nach oben auf zur Zeit maximal 750° bis 800° Celsius begrenzt. Im höheren Lastbereich des Motors ist es deshalb notwendig, dass Abgas auf dem Weg zum Katalysator zu kühlen. Hierzu werden in einem ersten Schritt Luftzuführung und Luftaustritt geöffnet, indem beispielsweise die Drosselklappe 6 in Öffnungsrichtung verschwenkt wird, wobei der Antrieb zweckmäßigerweise mittels eines Stellgliedes wie Elektromotor erfolgt. In einem anderen Ausführungsbeispiel ist die Klappe (6) druckdifferenzgesteuert verstellbar, wobei es sich in diesem Fall um ein nicht direkt geregeltes Stellglied handelt. Der zwischen Innenrohr 2 und Außenschale 3 liegende Luftspalt 4 kann von Luft durchströmt werden, wobei beispielsweise der Fahrtwind genutzt wird. Auf diese Weise wird die von Innenrohr 2 an die durchströmende Luft abgegebene Wärme abtransportiert. Dieser Zustand entspricht einer passiven Belüftung des Luftspaltes 4, wobei der Öffnungsgrad der im Lufteinlass respektive im Luftauslass befindlichen Drosselklappe 6 die Durchströmung des Luftspaltes 4 bestimmt.

In einem zweiten Schritt wird beispielsweise bei einem Betrieb im Volllastbereich, wenn die Drosselklappe 6 bereits vollständig geöffnet ist, ein Lüfter 7 hinzugeschaltet. Auf diese Weise wird der Luftdurchsatz in Luftspalt 4 noch weiter gesteigert, wobei das durchgesetzte Luftvolumen mittels des Lüfters 7 regelbar ist. Dieser Zustand entspricht einer aktiven Belüftung des Luftspaltes 4.

Zwischen abgeschlossenem, passiv belüftetem und/oder aktiv belüftetem Zustand des Lustspaltvolumens kann kontinuierlich gewechselt werden, indem die Drosselklappe 6 langsam geöffnet wird und dann, wenn sie eine vollständig geöffnete Stellung erreicht hat, gegebenenfalls bereits auch schon früher, der Lüfter 7 zugeschaltet wird, der ein der Ansteuerung entsprechendes veränderbares Luftvolumen durchsetzt.

Die Ansteuerung der mittels eines in der Figur nicht dargestellten Elektromotormotors betätigten Drosselklappe 6, des Lüfters 7 sowie gegebenenfalls weiterer die Belüftung beeinflussender Elemente etwa im Luftauslass 11, erfolgt mittels einer Regeleinrichtung 8. Zur Regelung werden eine Mehrzahl von Eingangsgrößen verwendet, in der Figur beispielhaft mit 9a, 9b, 9c bezeichnet, wobei es sich um Signale von Temperatursensoren, Lambdasonden, die Last des Motors charakterisierenden Parametern, der Fahrzeuggeschwindigkeit etc. handelt. Die Signale können direkt von Sensoren stammen oder auch von einem Bussystem abgegriffen werden. Eine Regelung erfolgt dahingehend, dass das durch das Innenrohr 2 strömende Abgas jeweils so temperiert wird, das es innerhalb der für den Betrieb des Katalysators geltenden thermischen Grenzen liegt.

Die Durchströmung des Luftspaltes 4 erfolgt im Ausführungsbeispiel in der selben Richtung, in der auch das Innenrohr 2 vom Abgas durchströmt wird, wobei es in einem anderen Ausführungsbeispiel zweckmäßig ist, wenn der Luftspalt 4 entgegen der Abgasströmungsrichtung durchströmt wird.

## Patentansprüche

1. Einrichtung zum Einstellen der Temperatur von in einem mit einer Außenschale versehenen Rohr geführten Abgasen, wobei zwischen Rohr und Außenschale ein Luftspalt gebildet wird, **dadurch gekennzeichnet, dass** der Luftspalt (4) einerseits zumindest zeitweise isolierend und andererseits zumindest zeitweise Wärme zu- oder abführend nutzbar ist.

2. Einrichtung nach Anspruch 1, **dadurch gekennzeichnet, dass** das Luftspaltvolumen (4) abschließbar ist.

3. Einrichtung nach Anspruch 1, **dadurch gekennzeichnet, dass** das Luftspaltvolumen (4) passiv belüftbar ist.

4. Einrichtung nach Anspruch 2 oder 3, bei der das Luftspaltvolumen einen Eintritts- sowie einen Austrittsbereich aufweist, **dadurch gekennzeichnet, dass** im Eintritts- (5) und/oder im Austrittsbereich (11) wenigstens eine Einrichtungen (6) zur Drosselung des Durchflusses angeordnet ist.

5. Einrichtung nach Anspruch 1, **dadurch gekennzeichnet, dass** das Luftspaltvolumen (4) aktiv belüftbar ist.

6. Einrichtung nach Anspruch 5 bei der das Luftspaltvolumen einen Eintritts- sowie einen Austrittsbereich aufweist, **dadurch gekennzeichnet, dass** im Eintritts- (5) und/oder im Austrittsbereich (11) wenigstens ein Lüfter (7) angeordnet ist.

7. Einrichtung nach wenigstens einem der vorhergegangenen Ansprüche, **dadurch gekennzeichnet, dass** ein Wechsel zwischen abgeschlossenem, passiv belüftetem und/oder aktiv belüftetem Zustand des Luftspaltvolumens (4) abhängig von einer Abgassolltemperatur erfolgt.

8. Einrichtung nach Anspruch 7, **dadurch gekennzeichnet, dass** ein Wechsel mittels einer Regeleinrichtung (8) durch entsprechende Ansteuerung der wenigstens einen Einrichtung (6) zur Drosselung des Durchflusses und/oder des wenigstens einen Lüfters (7) geregelt wird.
